# EUROPÄISCHE PATENTANMELDUNG

(11) **EP 4 552 807 A1**
(43) Veröffentlichungstag der Anmeldung: **14.05.2025**
(21) Anmeldenummer: 24209686.5
(22) Anmeldetag: 30.10.2024
(51) Int. Cl.: B25J 9/10

(54) **ROBOTER MIT DREHBARER AUFHÄNGUNG FÜR EINE VERPACKUNGSANLAGE**

(30) Priorität: 07.11.2023 DE 102023130735
(71) Anmelder: MULTIVAC Sepp Haggenmüller SE & Co. KG, 87787 Wolfertschwenden (DE)
(72) Erfinder: REMMELE, Thorsten, 87784 Westenheim (DE); NAPRAVNIK, Christian, 83026 Rosenheim (DE)
(74) Vertreter: Grünecker Patent- und Rechtsanwälte PartG mbB

(57) **Zusammenfassung**

Ein Roboter (16, 17) umfasst eine Aufhängung (20) und zumindest zwei Stellarme (21, 21'), welche jeweils gelenkig an der Aufhängung (20) angebracht sind. Der Roboter (16, 17) umfasst ferner eine Werkzeugaufnahme (23), welche gelenkig an den Stellarmen (21, 21') angebracht ist. Durch Bewegen der Stellarme (21, 21 `) relativ zu der Aufhängung (20) ist die Werkzeugaufnahme (23) in Draufsicht entlang einer linearen Werkzeugaufnahmen-Bewegungsachse (26) bewegbar. Die Aufhängung (20) ist um eine Aufhängungs-Drehachse (29) drehbar.

## Beschreibung

Die vorliegende Erfindung bezieht sich auf einen Roboter für eine Verpackungsanlage, auf eine Verpackungsanlage oder auf ein Verfahren zum Betreiben eines Roboters in einer Verpackungsanlage.

### Stand der Technik

Beispielsweise offenbart die DE 10 2008 019 709 A1 einen Roboter zum Bewegen und Positionieren von zu verpackendem Gut für eine Verpackungsmaschine. Der Roboter umfasst zwei Armabschnitte, die gelenkig miteinander verbunden sind. Wenigstens ein Arm ist motorisch antreibbar. Ein zu positionierendes Element ist gelenkig mit wenigstens einem der Armabschnitte verbunden und wird durch den Roboterarm bewegt. Der Roboter umfasst ferner eine Getriebevorrichtung mit einem Führungsglied, die als Ausgleichsvorrichtung für eine Kipp- und/oder Schwenkbewegung des zu positionierenden Elements dient. Nachteilig an diesem Stand der Technik ist, dass eine Einsatzmöglichkeit des Roboters dadurch begrenzt ist, dass der Roboter nur geringe Gewichte bewegen kann.

Ferner ist aus EP 3 088 307 A1 eine Tiefziehverpackungsmaschine mit einem 2-Achs-Roboter bekannt. Der 2-Achs-Roboter weist einen Roboterkopf mit einem Werkzeug auf. Der Roboterkopf ist in zwei Freiheitsgraden, d.h. in einem 2-dimensionalen Bewegungsfeld, bewegbar. Zusätzlich kann der Roboterkopf eine rotatorische Bewegung ausführen. Nachteilig an diesem Stand der Technik ist, dass der Roboterkopf in seiner Bewegung stark eingeschränkt ist. Ferner sind schnelle Bewegungen des Roboterkopfs nicht oder nur begrenzt realisierbar.

### Aufgabe

Ausgehend von dem bekannten Stand der Technik besteht die zu lösende technische Aufgabe darin, einen Roboter für eine Verpackungsanlage, eine Verpackungsanlage oder ein Verfahren zum Betreiben eines Roboters in einer Verpackungsanlage anzugeben, die die Nachteile des Stands der Technik weitgehend überwinden.

### Lösung

Diese Aufgabe wird erfindungsgemäß durch einen Roboter für eine Verpackungsanlage gemäß dem Anspruch 1, eine Verpackungsanlage gemäß dem Anspruch 11 oder ein Verfahren zum Betreiben eines Roboters in einer Verpackungsanlage gemäß dem Anspruch 12 gelöst. Vorteilhafte Weiterbildungen der Erfindung sind in den Unteransprüchen erfasst.

Gemäß einem Aspekt der Erfindung wird ein Roboter für eine Verpackungsanlage bereitgestellt. Der Roboter umfasst eine Aufhängung und zumindest zwei Stellarme, welche jeweils gelenkig an der Aufhängung angebracht sind. Der Roboter umfasst ferner eine Werkzeugaufnahme, welche gelenkig an den Stellarmen angebracht ist. Durch Bewegen der Stellarme relativ zu der Aufhängung ist die Werkzeugaufnahme in Draufsicht entlang einer linearen Werkzeugaufnahmen-Bewegungsachse bewegbar. Die Aufhängung ist um eine Aufhängungs-Drehachse drehbar. Dies ermöglicht es, die Werkzeugaufnahme einfach und insbesondere vielfältig zu bewegen. Durch eine Drehung der Aufhängung um die Aufhängungs-Drehachse kann die Werkzeugaufnahmen-Bewegungsachse drehbar sein.

Der Roboter kann unterschiedliche Bewegungen ausführen, wodurch die Werkzeugaufnahme innerhalb eines Bewegungsraums bewegbar ist. Der Bewegungsraum der Werkzeugaufnahme kann von der Werkzeugaufnahme erreichbare räumliche Positionen angeben. Aufgrund der Verbindung der Aufhängung mit der Werkzeugaufnahme über die Stellarme kann die Werkzeugaufnahme infolge einer Drehbewegung der Aufhängung um die Aufhängungs-Drehachse drehbar sein. Dadurch kann, insbesondere ergänzend zu der Bewegbarkeit der Werkzeugaufnahme in Draufsicht entlang der linearen Werkzeugaufnahmen-Bewegungsachse, der Bewegungsraum der Werkzeugaufnahme vergrößert werden. Die Werkzeugaufnahme kann in einem 3-dimensionalen Bewegungsfeld bewegbar sein. Optional kann eine Flexibilität des Roboters erhöht werden, wenn sein Bewegungsraum vergrößert ist.

Die Stellarme können in Abhängigkeit voneinander bewegbar sein. Die Stellarme können in Abhängigkeit von der gewünschten Bewegung der Werkzeugaufnahme gleich und/oder unterschiedlich bewegbar sein. Die Stellarme können mittels je eines Stellarm-Gelenks an der Aufhängung angeordnet sein. Das Stellarm-Gelenk kann eine Bewegung des jeweiligen Stellarms relativ zu der Aufhängung mit einem Freiheitsgrad, insbesondere eine Drehung, insbesondere um eine Stellarm-Drehachse, zulassen. Das heißt, die Stellarme können in einem 2-dimensionalen Bewegungsfeld bewegbar sein. Das Stellarm-Gelenk kann beispielsweise ein Drehgelenk, zum Beispiel ein Scharniergelenk, sein. Die Stellarm-Gelenke können aktiv motorisch antreibbar sein. Optional kann nur ein Stellarm-Gelenk aktiv motorisch antreibbar sein. Indem die Stellarme in einem 2-dimensionalen Bewegungsfeld bewegbar sein können, können mit dem Roboter bzw. der Werkzeugaufnahme - im Vergleich zu einer Bewegung der Stellarme in einem 3-dimensionalen Bewegungsfeld - größere Lasten aufnehmbar sein. Der Roboter kann insbesondere zur Aufnahme einer Last inklusive seines Eigengewichts von mindestens etwa 10 kg, vorzugsweise mindestens etwa 15 kg, ausgebildet sein. Um das Eigengewicht des Roboters zu reduzieren, können beispielsweise die Stellarme in Leichtbauweise gefertigt sein. Zum Beispiel können in den Stellarmen Materialaussparungen vorgesehen sein, die ein Gewicht reduzieren und gleichzeitig eine erforderliche Steifigkeit erhalten bleibt.

Die Aufhängung kann an einem Träger angeordnet sein. Der Träger kann zum Beispiel an der Verpackungsanlage, zum Beispiel einem Anlagengestell der Verpackungsanlage, angeordnet sein. Die Aufhängung kann mittels eines Aufhängungs-Drehgelenks an dem Träger, vorzugsweise lösbar, angeordnet sein. Dadurch kann der Roboter von dem Träger demontierbar sein. Optional kann dies ein einfaches Trennen der Bauteile, zum Beispiel zum Zwecke einer Wartung oder Reparatur, ermöglichen. Das Aufhängungs-Drehgelenk kann eine Bewegung der Aufhängung relativ zu dem Träger mit zumindest einem Freiheitsgrad, insbesondere eine Drehung, insbesondere um die Aufhängungs-Drehachse, zulassen. Das Aufhängungs-Drehgelenk kann aktiv motorisch antreibbar sein. Die Aufhängungs-Drehachse kann in Draufsicht durch einen Mittelpunkt der Aufhängung verlaufen. Dadurch kann eine günstige Kraftverteilung bzw. -leitung in dem Roboter erreichbar sein. Optional kann die Aufhängungs-Drehachse in Draufsicht außerhalb des Mittelpunkts der Aufhängung verlaufen. Dadurch kann der Roboter flexibel an räumliche Einbaubedingungen, insbesondere der Verpackungsanlage, anpassbar sein. Die Aufhängung kann um einen Aufhängungs-Drehwinkel um die Aufhängungs-Drehachse drehbar sein. Der Aufhängungs-Drehwinkel kann mindestens 90 Grad, vorzugsweise mindestens 180 Grad, vorzugsweise mindestens 360 Grad, in zumindest eine Richtung betragen. Dies kann den Bewegungsraum der Werkzeugaufnahme vergrößern.

Die lineare Werkzeugaufnahmen-Bewegungsachse kann in der Draufsicht durch den Mittelpunkt der Aufhängung verlaufen. Die Mittelachse des Stellarms kann sich in der Draufsicht in Längsrichtung jedes Stellarms erstrecken. Dadurch kann eine günstige Kraftverteilung bzw. Kraftleitung in dem Roboter erreichbar sein. Optional kann die Werkzeugaufnahmen-Bewegungsachse in der Draufsicht nicht durch den Mittelpunkt der Aufhängung verlaufen. Dadurch kann der Roboter flexibel an räumliche Einbaubedingungen, insbesondere der Verpackungsanlage, anpassbar sein.

Die Werkzeugaufnahme kann mittels je eines Werkzeugaufnahme-Gelenks an den Stellarmen angeordnet sein. Das Werkzeugaufnahme-Gelenk kann eine Bewegung des jeweiligen Stellarms relativ zu der Werkzeugaufnahme mit zumindest einem Freiheitsgrad, insbesondere eine Drehung, insbesondere um zumindest eine Werkzeugaufnahme-Kippachse, zulassen. Die Werkzeugaufnahme-Kippachse kann orthogonal zu der Aufhängungs-Drehachse und/oder parallel zu jeder Stellarm-Drehachse sein. Das Werkzeugaufnahme-Gelenk kann beispielsweise ein Drehgelenk, zum Beispiel ein Scharniergelenk. sein. Optional kann das Werkzeugaufnahme-Gelenk eine Bewegung der Werkzeugaufnahme mit drei Freiheitsgraden, insbesondere Drehung um drei Raumachsen, zulassen. Das Werkzeugaufnahme-Gelenk kann beispielsweise ein Kugelgelenk sein.

Die Werkzeugaufnahme kann zur Aufnahme eines Werkzeugs ausgebildet sein. Dadurch kann das Werkzeug einfach mit der Bewegung der Werkzeugaufnahme mitbewegt werden. Das Werkzeug kann an der Werkzeugaufnahme, vorzugsweise lösbar, befestigt sein. Dies kann ein einfaches Trennen der Bauteile bei Bedarf, zum Beispiel zum Zwecke einer Wartung, Reparatur oder eines Werkzeugwechsels, ermöglichen. Optional können die Werkzeugaufnahme und das Werkzeug integral ausgebildet sein. Das Werkzeug kann dazu vorgesehen sein, ein zu bewegendes Objekt zu bewegen. Das Werkzeug kann beispielsweise ein Handhabungswerkzeug, z. B. ein Greifer und/oder Sauger, sein. Solche Greifer bzw. Sauger können handelsübliche Standardwerkzeuge sein, welche in der Regel die notwendigen Funktionen umfassen, um eine Bewegung des Objekts zu realisieren. Es kann von einer Art bzw. Beschaffenheit des zu bewegenden Objekts abhängen, welches Werkzeug eingesetzt werden soll, d.h. ob das Objekt gegriffen werden kann/soll oder z. B. durch Ansaugen gehalten werden kann/soll. Im Idealfall kann eine Genauigkeit der Bewegung bzw. einer Positionierung des Werkzeugs, und insbesondere des zu bewegenden Objekts, erhöht werden.

Der Roboter kann über eine Roboter-Steuerung verfügen. Diese kann den Betrieb des Roboters steuern und überwachen. Die Roboter-Steuerung kann einen Roboter oder optional mehrere Roboter steuern. Mehrere Roboter-Steuerungen können kommunikativ miteinander verbunden sein.

Der Roboter kann aus Edelstahl bestehen oder Edelstahl umfassen. Dadurch kann eine hohe Festigkeit des Roboters erreicht werden. Der Roboter kann für den Einsatz hoher Lasten geeignet sein. Optional kann ein Einsatz des Roboters für Lebensmittel ermöglicht werden und im Idealfall eine Reinigung des Roboters erleichtert werden. Optional kann der Roboter Aluminium und/oder Kunststoff umfassen oder daraus bestehen.

Vorzugsweise ist jeder Stellarm um eine Stellarm-Drehachse drehbar. Die Stellarm-Drehachsen können orthogonal zu der Aufhängungs-Drehachse sein. Dadurch kann der Bewegungsraum der Werkzeugaufnahme vergrößert werden. Eine Drehung der Stellarme je um die entsprechende Stellarm-Drehachse kann eine Bewegung der an den Stellarmen angeordneten Werkzeugaufnahme bewirken. Jeder Stellarm kann um einen Stellarm-Drehwinkel um die Stellarm-Drehachse drehbar sein. Der Stellarm-Drehwinkel kann mindestens 45 Grad, vorzugsweise mindestens 60 Grad, vorzugsweise mindestens 90 Grad, in zumindest eine Richtung betragen. Die Stellarm-Drehachsen können parallel zueinander oder identisch sein. Die Stellarm-Drehachsen können gleich weit von der Aufhängungs-Drehachse beabstandet sein.

Vorzugsweise weist der Roboter zumindest zwei Stellarm-Antriebe zum separaten Antreiben der zwei Stellarme auf. Optional kann durch das separate Antreiben eine Genauigkeit der Bewegung jedes Stellarms erhöht werden, da nicht ein Stellarm passiv von einem aktiv bewegbaren Stellarm mitbewegt wird. Die Stellarm-Antriebe können kleiner und/oder schwächer dimensioniert sein, da sie nur je einen Stellarm antreiben müssen. Das separate Antreiben der Stellarme widerspricht dabei nicht der Eigenschaft, dass die Bewegung der Stellarme in Abhängigkeit voneinander erfolgt. Mit anderen Worten kann aufgrund der Verbindung der Aufhängung mit der Werkzeugaufnahme über die Stellarme die Bewegung der Stellarme in Abhängigkeit voneinander erfolgen, während die Stellarme je separat antreibbar sein können. Optional kann nur ein Stellarm-Antrieb zum separaten Antreiben eines Stellarms vorgesehen sein. Das heißt, dass das aktive Antreiben eines Stellarms die passive Bewegung des weiteren Stellarms beeinflussen kann und andersherum. Die Stellarm-Antriebe können elektrisch, pneumatisch oder hydraulisch betreibbar sein.

Vorzugsweise ist die Werkzeugaufnahme durch Bewegen der Stellarme relativ zu der Aufhängung anhebbar und/oder absenkbar. Die Werkzeugaufnahme kann abhängig von einer Bewegung der Stellarme eine zu der Bewegung entlang der linearen Werkzeugaufnahmen-Bewegungsachse orthogonale Bewegung ausführen. Dadurch kann der Bewegungsraum der Werkzeugaufnahme vergrößert werden. Je nach der Bewegung der Stellarme können diese beiden Bewegungen der Werkzeugaufnahme auch überlagert werden. Die Werkzeugaufnahme kann um mindestens etwa 30 cm, vorzugsweise um mindestens 50 cm, vorzugsweise um mindestens 80 cm, anhebbar und/oder absenkbar sein.

Vorzugsweise ist die Aufhängung entlang einer linearen Aufhängungs-Bewegungsachse bewegbar. Dadurch kann der Bewegungsraum der Werkzeugaufnahme vergrößert werden. Die lineare Aufhängungs-Bewegungsachse kann in Draufsicht durch den Mittelpunkt der Aufhängung gehen. Optional kann die lineare Aufhängungs-Bewegungsachse in Draufsicht von dem Mittelpunkt der Aufhängung versetzt sein. Die Aufhängung kann mittels einer Linearführung an dem Träger befestigt sein. Die Linearführung kann einen stationären Teil an dem Träger und einen beweglichen Schlitten an der Aufhängung, insbesondere an dem Aufhängungs-Drehgelenk, aufweisen. Der Schlitten kann relativ zu dem stationären Teil bewegbar, insbesondere gleitfähig, sein. Die lineare Aufhängungs-Bewegungsachse kann von einer Positionierung bzw. Orientierung des stationären Teils abhängig sein. Die Aufhängung bzw. der Schlitten an der Aufhängung kann relativ zu dem Träger bzw. dem stationären Teil an dem Träger um mindestens etwa 30 cm, vorzugsweise um mindestens etwa 50 cm, vorzugsweise um mindestens etwa 100 cm, bewegbar sein. Der Träger bzw. der stationäre Teil kann austauschbar sein, um zum Beispiel ein stationäres Teil mit größerer oder kleinerer Länge zu verwenden. Optional kann das stationäre Teil fest mit dem Träger verbunden oder integral mit diesem ausgebildet sein. Das Aufhängungs-Drehgelenk kann an der Linearführung, insbesondere dem beweglichen Schlitten, lösbar oder fest angebracht sein. Insbesondere eine lösbare Verbindung kann ein einfaches Trennen der Bauteile bei Bedarf, zum Beispiel zum Zwecke einer Wartung oder Reparatur, ermöglichen.

Vorzugsweise weist der Roboter einen Aufhängungs-Linearantrieb zum Bewegen der Aufhängung entlang der linearen Aufhängungs-Bewegungsachse auf. Dadurch kann die Aufhängung unabhängig bewegt werden. Der Aufhängungs-Linearantrieb kann elektrisch, pneumatisch oder hydraulisch betreibbar sein.

Vorzugsweise weist jeder Stellarm einen Oberarm und einen Unterarm auf. Der Oberarm kann gelenkig an der Aufhängung angebracht sein. Der Unterarm kann gelenkig an der Werkzeugaufnahme angebracht sein. Der Oberarm und der Unterarm können gelenkig miteinander verbunden sein. Der Oberarm und der Unterarm können mittels eines Oberarm-Unterarm-Gelenks gelenkig verbunden sein. Das Oberarm-Unterarm-Gelenk kann beispielsweise ein Drehgelenk, zum Beispiel ein Scharniergelenk, sein. Das Oberarm-Unterarm-Gelenk kann passiv bewegbar sein, das heißt, nicht aktiv motorisch antreibbar sein. Eine Bewegung des Unterarms kann von einer Bewegung des Oberarms abhängig sein, insbesondere wobei die Bewegung des Oberarms von dem aktiv motorisch antreibbaren Stellarm-Gelenk abhängig sein kann. Der Oberarm und der Unterarm können relativ zueinander um einen Oberarm-Unterarm-Drehwinkel um eine Oberarm-Unterarm-Drehachse drehbar sein. Der Oberarm-Unterarm-Drehwinkel kann mindestens 60 Grad, vorzugsweise mindestens 120 Grad, in zumindest eine Richtung betragen. Die Oberarm-Unterarm-Drehachsen können parallel zu den Stellarm-Drehachsen sein.

Vorzugsweise weist der Roboter einen Aufhängungs-Drehantrieb zum Drehen der Aufhängung um die Aufhängungs-Drehachse auf. Dadurch kann die Aufhängung unabhängig bewegt werden. Der Aufhängungs-Drehantrieb kann elektrisch, pneumatisch oder hydraulisch betreibbar sein. Die Wahl des Aufhängungs-Drehantriebs kann zum Beispiel von einem Platz- oder Leistungsbedarf, einer Genauigkeit des Aufhängungs-Drehantriebs oder einem Kostenbudget abhängig sein.

Vorzugsweise ist der Aufhängungs-Drehantrieb ein Servoantrieb. Dadurch kann eine besonders präzise Steuerung der Aufhängung erreicht werden.

Vorzugsweise weist der Roboter einen Werkzeugaufnahmen-Drehantrieb zum Drehen der Werkzeugaufnahme um eine Werkzeugaufnahmen-Drehachse auf. Die Werkzeugaufnahmen-Drehachse kann parallel zu der Aufhängungs-Drehachse sein. Dadurch kann die Werkzeugaufnahme unabhängig bewegt werden. Der Werkzeugaufnahmen-Drehantrieb kann elektrisch, pneumatisch oder hydraulisch betreibbar sein.

Die Werkzeugaufnahme kann um mindestens 90 Grad, vorzugsweise um mindestens 180 Grad, vorzugsweise um mindestens 360 Grad, in zumindest eine Richtung drehbar sein. Dies kann den Bewegungsraum der Werkzeugaufnahme vergrößern. Die Werkzeugaufnahme kann abhängig von dem zu bewegenden Objekt, insbesondere abhängig von dessen Form oder Aufnahmepunkt für das Werkzeug, orientierbar sein. Die Werkzeugaufnahme kann abhängig von einer Objektaufnahmeposition, an der das bewegende Objekt von dem Werkzeug aufnehmbar ist, und/oder einer Objektabgabeposition, an der das bewegende Objekt von dem Werkzeug abgebbar ist, insbesondere einer Umgebung davon, positionierbar sein.

Aufgrund des oben beschriebenen Bewegungsraums der Werkzeugaufnahme und der hohen Traglast kann der Roboter vielfältig einsetzbar und insbesondere in industrielle Abläufe, zum Beispiel der Verpackungsindustrie, optimal integrierbar werden.

Gemäß einem weiteren Aspekt der Erfindung wird eine Verpackungsanlage mit einem Roboter bereitgestellt, insbesondere mit einem Roboter der oben beschriebenen Art.

Die Verpackungsanlage kann zum Beispiel eine Tiefziehverpackungsanlage sein. Die Verpackungsanlage kann mehrere Arbeitsstationen aufweisen, insbesondere eine Formstation zum Formen, insbesondere Tiefziehen, einer Verpackungsmulde in eine Folie, eine Befüllstation zum Befüllen der Verpackungsmulden mit Produkten, eine Siegelstation zum Versiegeln der Verpackungsmulden mit einer Oberfolie und eine Schneidstation zum Vereinzeln der Verpackungsmulden. Die Arbeitsstationen können in der genannten Reihenfolge hintereinander entlang einer Produktionsrichtung der Verpackungsanlage angeordnet sein. Die Arbeitsstationen können je durch ein Transportband prozesstechnisch miteinander verbunden sein. Stromaufwärts der Verpackungsanlage kann ein Zuführband und stromabwärts der Verpackungsanlage kann ein Abführband vorgesehen sein. Ferner kann einzelnen Arbeitsstationen, zum Beispiel der Befüllstation, eine Zuführvorrichtung, zum Beispiel ein Produktzuführband, zum Zuführen von Produkten zugeordnet sein.

Die Verpackungsanlage kann ein die Arbeitsstationen tragendes Anlagengestell aufweisen. An dem Anlagengestell kann zumindest ein Träger, vorzugsweise lösbar, zum Beispiel mit Schrauben, angebracht oder optional integral mit diesem ausgebildet sein. An dem Träger kann der Roboter, insbesondere die Aufhängung, vorzugsweise lösbar, angebracht sein. Optional können mehrere Roboter vorgesehen sein. Es können mehrere Roboter an einem Träger angeordnet sein. Insbesondere eine lösbare Verbindung kann ein einfaches Trennen der Bauteile bei Bedarf, zum Beispiel zum Zwecke einer Wartung, Reparatur oder eines Anlagenumbaus, ermöglichen.

Der Träger kann aus Edelstahl bestehen oder Edelstahl umfassen. Dadurch kann eine hohe Festigkeit des Trägers erreicht werden und optional einen Einsatz der Verpackungsanlage für Lebensmittel ermöglichen. Im Idealfall kann eine Reinigung des Trägers erleichtert werden. Optional kann der Träger Aluminium und/oder Kunststoff umfassen oder daraus bestehen.

Der oder die Roboter können einer oder mehreren Arbeitsstationen, zum Beispiel der Befüllstation und/oder der Schneidstation, zugeordnet sein. Die Roboter können derart steuerbar sein, dass ihre Werkzeugaufnahmen je innerhalb eines von den individuellen Robotern abhängigen Bewegungsraums bewegbar sind, ohne einen anderen Roboter zu beschädigen und/oder dessen gewünschte Bewegung zu behindern. Dies kann insbesondere dann vorteilhaft sein, wenn sich die Bewegungsräume mehrerer Roboter zumindest teilweise überlappen, zum Beispiel, wenn mehrere Roboter einer Arbeitsstation zugeordnet sind. Beispielsweise kann der Roboter zum Bewegen eines zu bewegenden Objekts vorgesehen sein. Das zu bewegende Objekt kann ein Produkt und/oder eine vereinzelte Verpackungsmulde sein.

Die Verpackungsanlage kann über eine Anlagen-Steuerung verfügen. Diese kann die in der Verpackungsanlage ablaufenden Prozesse steuern und überwachen. Eine Roboter-Steuerung zur Steuerung des Roboters bzw. der Roboter kann in die Anlagen-Steuerung integriert sein oder separat ausgeführt sein. Die Anlagen-Steuerung kann kommunikativ mit der Roboter-Steuerung verbunden sein. Dadurch kann eine Bewegung des Roboters auf Bearbeitungsprozesse der Verpackungsanlage abgestimmt werden und umgekehrt.

Gemäß einem weiteren Aspekt der Erfindung wird ein Verfahren zum Betreiben eines Roboters in einer Verpackungsanlage bereitgestellt, wobei das Verfahren die Schritte aufweist: Bewegen zumindest zweier gelenkig an einer Aufhängung angebrachter Stellarme relativ zu der Aufhängung, so dass eine an den zwei Stellarmen angebrachte Werkzeugaufnahme relativ zu der Aufhängung in Draufsicht entlang einer linearen Werkzeugaufnahmen-Bewegungsachse bewegt wird, und Drehen der Aufhängung um eine Aufhängungs-Drehachse zum Erweitern eines Bewegungsraums der Werkzeugaufnahme. Es können sich dieselben Vorteile wie bei dem oben genannten Roboter ergeben. Das Verfahren kann zum Beispiel mittels der Roboter-Steuerung gesteuert werden.

Vorzugsweise wird die Aufhängung entlang einer linearen Aufhängungs-Bewegungsachse zum Erweitern des Bewegungsraums der Werkzeugaufnahme bewegt.

Vorzugsweise wird die Werkzeugaufnahme um eine Werkzeugaufnahmen-Drehachse gedreht. Dadurch kann der Bewegungsraum der Werkzeugaufnahme vergrößert werden.

Vorzugsweise wird die Werkzeugaufnahme zwischen einer Objektaufnahmeposition und einer Objektabgabeposition bewegt. Die Objektaufnahmeposition kann eine Position der Werkzeugaufnahme angeben, an der die Werkzeugaufnahme ein zu bewegendes Objekt aufnimmt. Die Objektabgabeposition kann eine Position der Werkzeugaufnahme angeben, an der die Werkzeugaufnahme das zu bewegende Objekt abgibt.

Vorzugsweise werden die Aufhängung und/oder die Stellarme und/oder die Werkzeugaufnahme zeitlich überlappend bewegt. Dadurch kann eine Zeit für die Ausführung einer gewünschten Bewegung der Werkzeugaufnahme, insbesondere zwischen einer Objektaufnahmeposition und einer Objektabgabeposition, verringert werden. Optional können die Bewegungen der Aufhängung und/oder der Stellarme und/oder der Werkzeugaufnahme zeitlich deckungsgleich erfolgen.

Die zu einem der Aspekte der Erfindung (Roboter, Verpackungsanlage oder Verfahren) beschriebenen Merkmale oder Erläuterungen können einzeln oder in Kombination auf die anderen Aspekte übertragen und mit diesen kombiniert werden.

Im Folgenden wird die Erfindung anhand von beispielhaften Ausführungsformen erläutert. Es zeigen:
- Figur 1: eine schematische Ansicht einer Verpackungsanlage gemäß einer Ausführungsform;
- Figur 2: eine schematische Draufsicht der Verpackungsanlage gemäß der Ausführungsform; und
- Figur 3: eine schematische Ansicht des Roboters gemäß der Ausführungsform.

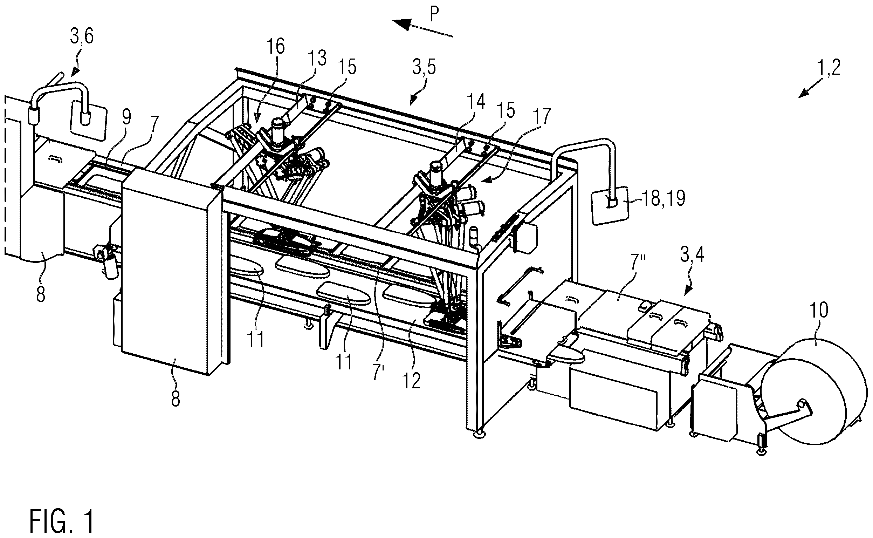

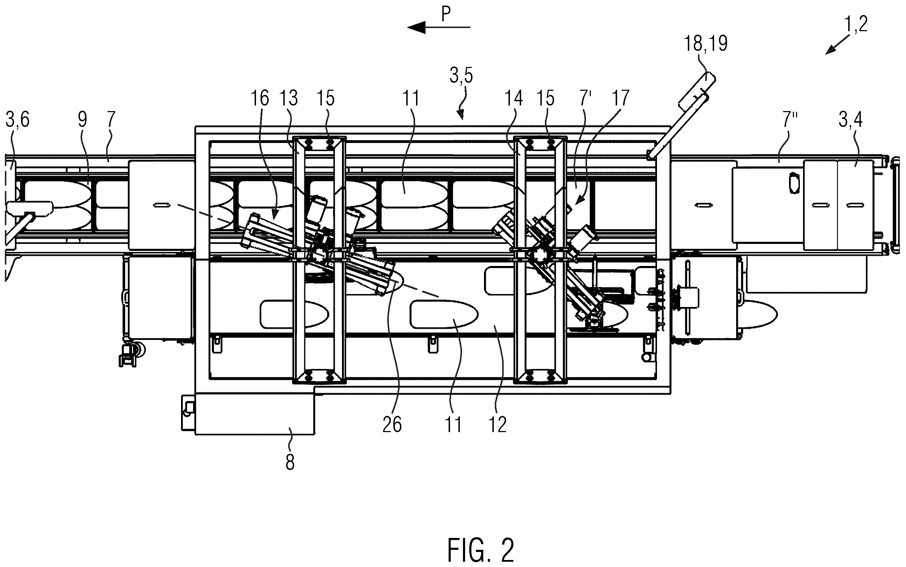

Figuren 1 und 2 zeigen eine Verpackungsanlage 1 gemäß einer Ausführungsform. Die Verpackungsanlage 1 ist im vorliegenden Ausführungsbeispiel als eine Tiefziehverpackungsanlage 2 ausgeführt. Die Tiefziehverpackungsanlage 2 weist mehrere Arbeitsstationen 3 auf, insbesondere eine Formstation 4 zum Formen, insbesondere Tiefziehen, einer Verpackungsmulde 9 in eine Folie 10, eine Befüllstation 5 zum Befüllen der Verpackungsmulden 9 mit Produkten 11, eine Siegelstation 6 zum Versiegeln der Verpackungsmulden 9 mit einer Oberfolie und eine nicht dargestellte Schneidstation zum Vereinzeln der Verpackungsmulden 9. Die Arbeitsstationen 3 sind in der genannten Reihenfolge hintereinander in einer Produktionsrichtung P der Tiefziehverpackungsanlage 2 angeordnet. Die Arbeitsstationen 3 sind je durch Transportbänder 7, 7', 7" prozesstechnisch miteinander verbunden.

Die Tiefziehverpackungsanlage 2 weist ein die Arbeitsstationen 3 tragendes Anlagengestell 8 auf. An der Befüllstation 5 sind an dem Anlagengestell 8 zwei Träger 13, 14 angebracht. Die Träger 13, 14 sind mittels Schrauben 15 lösbar an dem Anlagengestell 8 befestigt. Optional können die Träger 13, 14 fest an dem Anlagengestell 8 befestigt sein. Optional können das Anlagengestell 8 und die Träger 13, 14 integral ausgebildet sein. Insbesondere eine lösbare Verbindung kann ein einfaches Trennen der Bauteile bei Bedarf, zum Beispiel zum Zwecke einer Wartung, Reparatur oder eines Anlagenumbaus, ermöglichen.

Die Träger 13, 14 bestehen im vorliegenden Ausführungsbeispiel aus Edelstahl. Dadurch wird eine hohe Festigkeit der Träger 13, 14 erreicht und optional ein Einsatz der Tiefziehverpackungsanlage 2 für Lebensmittel ermöglicht. Im Idealfall wird eine Reinigung der Träger 13, 14 erleichtert. Optional können die Träger 13, 14 Aluminium und/oder Kunststoff umfassen oder daraus bestehen.

An jedem Träger 13, 14 ist ein Roboter 16, 17 angebracht, der im Folgenden näher erläutert wird. Optional können weitere Roboter vorgesehen sein, die insbesondere weiteren Arbeitsstationen 3 zugeordnet sein können. Im vorliegenden Ausführungsbeispiel sind die zwei Roboter 16, 17 der Befüllstation 5 zum Befüllen der Verpackungsmulden 9 mit Produkten 11 zugeordnet. Die Roboter 16, 17 werden derart gesteuert, dass sie Produkte 11, die der Befüllstation 5 mittels eines Produktzuführbandes 12 zugeführt werden, in die Verpackungsmulden 9, die auf dem Transportband 7' transportiert werden, füllen. Optional oder zusätzlich können der Schneidstation Roboter zum Sortieren der vereinzelten Verpackungsmulden 9 zugeordnet sein. Es können ein oder mehrere Roboter einer oder mehreren Arbeitsstationen 3 zugeordnet sein.

Die Roboter 16, 17 umfassen Edelstahl. Dadurch wird eine hohe Festigkeit der Roboter 16, 17 erreicht und optional einen Einsatz der Roboter 16, 17 für Lebensmittel ermöglicht. Im Idealfall wird eine Reinigung der Roboter 16, 17 erleichtert. Optional können die Roboter 16, 17 Aluminium und/oder Kunststoff umfassen oder daraus bestehen.

Die Tiefziehverpackungsanlage 2 verfügt ferner über eine Anlagen-Steuerung 18. Diese steuert und überwacht die in der Tiefziehverpackungsanlage 2 ablaufenden Prozesse. Ferner verfügen die Roboter 16, 17 über eine gemeinsame Roboter-Steuerung 19. Diese überwacht und steuert den Betrieb der Roboter 16, 17. Im Idealfall steuert die Roboter-Steuerung 19 die Roboter 16, 17 derart, dass bei einer Bewegung der Roboter 16, 17 sie selbst und ihre Umgebung nicht beschädigt werden. Im vorliegenden Ausführungsbeispiel steuert eine Roboter-Steuerung 19 beide Roboter 16, 17. Optional können jedem Roboter 16, 17 eine eigene Roboter-Steuerung zugeordnet sein. Mehrere Roboter-Steuerungen können kommunikativ miteinander verbunden sein. Die Roboter-Steuerungen 19 ist im vorliegenden Ausführungsbeispiel in die Anlagen-Steuerung 18 integriert. Optional können die Anlagen-Steuerung 18 und die Roboter-Steuerung 19 separat ausgeführt sein. Die Anlagen-Steuerung 18 ist kommunikativ mit der Roboter-Steuerung 19 verbunden. Dadurch kann eine Bewegung der Roboter 16, 17 auf Prozesse der Tiefziehverpackungsanlage 2 abgestimmt werden und umgekehrt.

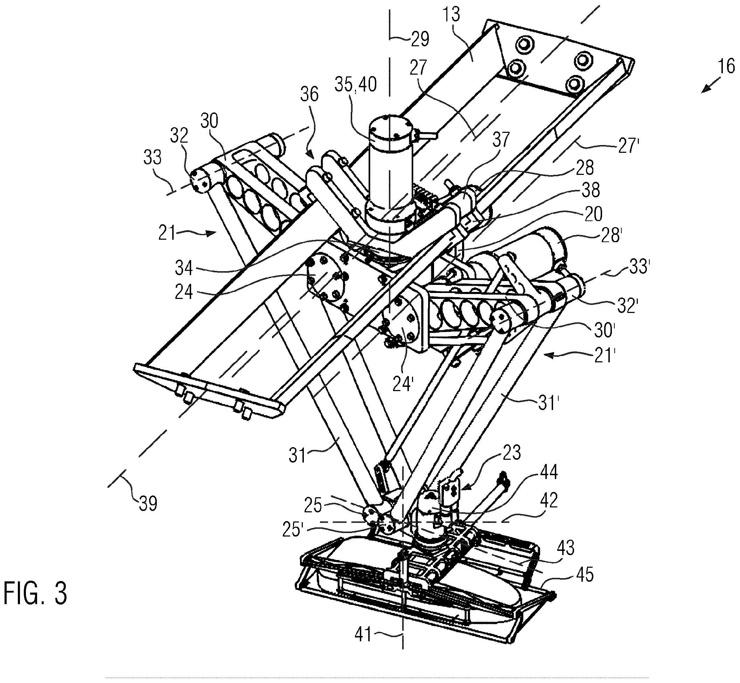

Figur 3 zeigt eine schematische Ansicht eines Roboters 16 gemäß einer Ausführungsform. Der Roboter 16 ist konstruktiv identisch zum Roboter 17 aufgebaut. Zum Zwecke eines einfacheren Verständnisses beschränken sich die folgenden Ausführungen auf den Roboter 16.

Der Roboter 16 weist eine Aufhängung 20, zwei Stellarme 21, 21' und eine Werkzeugaufnahme 23 mit einem daran angeordneten Werkzeug 45 auf. Indem der Roboter 16, oder eine oder mehrere Komponenten davon, unterschiedliche Bewegungen ausführt, wird die Werkzeugaufnahme 23 innerhalb eines Bewegungsraums bewegt. Der Bewegungsraum gibt die von der Werkzeugaufnahme 23 erreichbaren räumlichen Positionen an. Zum Aufnehmen des Produkts 11 ist an der Werkzeugaufnahme 23 das Werkzeug 45 vorgesehen. Das Werkzeug 45 ist an der Werkzeugaufnahme 23 lösbar angebracht, wodurch ein einfaches Trennen der Bauteile bei Bedarf, zum Beispiel zum Zwecke einer Wartung, Reparatur oder eines Werkzeugwechsels, ermöglicht wird. Optional kann das Werkzeug 45 fest an der Werkzeugaufnahme 23 angebracht oder integral mit diesem ausgebildet sein. Das Werkzeug 45 ist als handelsübliches Handhabungswerkzeug in Form eines Greifers ausgebildet, der das Produkt 11 zum Bewegen ergreift. Optional kann das Werkzeug 45 ein Sauger sein.

Um das Produkt 11 zu bewegen, wird die Werkzeugaufnahme 23 mit dem Werkzeug 45 bewegt. Dabei hängt eine Genauigkeit der Bewegung bzw. einer Positionierung des Werkzeugs 45, und insbesondere des zu bewegenden Produkts 11, von dem Bewegungsraum der Werkzeugaufnahme 23 ab.

Im Folgenden werden der Aufbau des Roboters 16 sowie dessen Bewegung und der daraus resultierende Bewegungsraum der Werkzeugaufnahme 23 an einem Ausführungsbeispiel erläutert.

Die Stellarme 21, 21' des Roboters 16 sind jeweils mittels eines Stellarm-Gelenks 24, 24' in Form von Drehgelenken gelenkig an der Aufhängung 20 angebracht. Die Werkzeugaufnahme 23 ist mittels je eines Werkzeugaufnahme-Gelenks 25, 25' gelenkig an den Stellarmen 21, 21' angebracht. Die Werkzeugaufnahme 23 ist entsprechend der gelenkigen Kopplung mit den Stellarmen 21, 21' und der Aufhängung 20 innerhalb des Bewegungsraums bewegbar.

Durch Bewegen der Stellarme 21, 21' relativ zu der Aufhängung 20 ist die Werkzeugaufnahme 23 in Draufsicht entlang einer linearen Werkzeugaufnahmen-Bewegungsachse 26 bewegbar (siehe Figur 2).

Die lineare Werkzeugaufnahmen-Bewegungsachse 26 verläuft in der Draufsicht durch einen Mittelpunkt der Aufhängung 20 und ist in der Draufsicht kongruent zu einer Mittelachse jedes Stellarms 21, 21'. Dadurch wird eine günstige Kraftverteilung bzw. -leitung in dem Roboter 16 erreicht. Optional kann die Werkzeugaufnahmen-Bewegungsachse 26 in der Draufsicht parallel zu dem Mittelpunkt der Aufhängung 20 und/oder zu der Mittelachse jedes Stellarms 21, 21` sein. Dadurch kann der Roboter 16 flexibel an räumliche Einbaubedingungen, insbesondere der Verpackungsanlage 1, anpassbar sein.

Um die Werkzeugaufnahme 23 in Draufsicht entlang der linearen Werkzeugaufnahmen-Bewegungsachse 26 zu bewegen, werden die Stellarme 21, 21` in Abhängigkeit voneinander relativ zu der Aufhängung 20 je um eine Stellarm-Drehachse 27, 27' gedreht. Das heißt, die Stellarme 21, 21' werden in einem 2-dimensionalen Bewegungsfeld bewegt. Indem die Stellarme 21, 21' in einem 2-dimensionalen Bewegungsfeld bewegt werden, kann mit dem Roboter 16 bzw. der Werkzeugaufnahme 23 - im Vergleich zu einer Bewegung der Stellarme 21, 21` in einem 3-dimensionalen Bewegungsfeld - größerer Lasten aufgenommen werden. Im vorliegenden Ausführungsbeispiel kann der Roboter 16 eine Last inklusive seines Eigengewichts von mindestens etwa 15 kg aufnehmen.

Die Stellarm-Gelenke 24, 24' und die Stellarm-Drehachsen 27, 27' sind parallel zueinander angeordnet. Die Stellarm-Drehachsen 27, 27' sind orthogonal zu einer nachfolgend beschriebenen Aufhängungs-Drehachse 29. Optional können die Stellarm-Gelenke 24, 24' in Draufsicht hintereinander angeordnet sein, sodass die Stellarm-Drehachsen 27, 27' in Vorderansicht kongruent sind.

Wie groß die lineare Bewegung der Werkzeugaufnahme 23 ist, hängt davon ab, wie weit sich die Stellarme 21, 21' um die Stellarm-Drehachsen 27, 27' drehen. Dabei kann sich ein Stellarme 21, 21' stärker drehen als der andere oder sie können sich gleich weit drehen. Im vorliegenden Ausführungsbeispiel ist jeder Stellarm 21, 21` um einen Stellarm-Drehwinkel von mindestens 60 Grad in jede Richtung drehbar.

Um die Stellarme 21, 21' separat zu drehen, werden deren Stellarm-Gelenke 24, 24' je aktiv motorisch mittels je eines separaten Stellarm-Antriebs 28, 28' angetrieben. Durch das separate Antreiben wird eine Genauigkeit der Bewegung jedes Stellarms 21, 21' erhöht, da nicht ein Stellarm 21, 21' passiv von einem aktiv angetriebenen Stellarm 21, 21' mitbewegt wird. Im Idealfall können die Stellarm-Antriebe 28, 28' kleiner und/oder schwächer dimensioniert sein, da sie nur je einen Stellarm 21, 21' antreiben müssen. Optional kann nur ein Stellarm-Gelenk 24, 24' aktiv motorisch antreibbar sein. Die Stellarm-Antriebe 28, 28' werden im vorliegenden Ausführungsbeispiel elektrisch betrieben. Alternativ können die Stellarm-Antriebe 28, 28' pneumatisch oder hydraulisch betreibbar sein.

Um den Bewegungsraum der Werkzeugaufnahme 23 weiter zu vergrößern, weist jeder Stellarm 21, 21' ferner einen Oberarm 30, 30' und einen Unterarm 31, 31` auf. Die Oberarme 30, 30' sind gelenkig mittels der Stellarm-Gelenke 24, 24' an der Aufhängung 20 angebracht. Die Oberarme 30, 30' und die Unterarme 31, 31` sind gelenkig mittels Oberarm-Unterarm-Gelenken 32, 32' in Form von Drehgelenken miteinander verbunden. Die Oberarm-Unterarm-Gelenke 32, 32' bewegen sich im Gegensatz zu den Stellarm-Gelenken 24, 24' passiv, d.h. sie werden nicht aktiv motorisch angetrieben. Eine Bewegung der Unterarme 31, 31' ist also von einer Bewegung der Oberarme 30, 30' abhängig. Dabei ist, wie gesagt, die Bewegung der Oberarme 30, 30' von den aktiv motorisch angetriebenen Stellarm-Gelenken 24, 24' abhängig. Die Unterarme 31, 31' sind gelenkig mittels der Werkzeugaufnahme-Gelenke 25, 25' an der Werkzeugaufnahme 23 angebracht. Durch diese Konstruktion der Stellarme 21, 21' wird der Bewegungsraum der Werkzeugaufnahme 23 im Gegensatz zu einteilig ausgebildeten Stellarmen 21, 21' weiter vergrößert. Denn zusätzlich zu der Drehung der Oberarme 30, 30' um die Stellarm-Drehachsen 24, 24' können sich die Unterarme 31, 31` mittels der Oberarm-Unterarm-Gelenk2 32, 32' relativ zu den Oberarmen 30, 30' um einen Oberarm-Unterarm-Drehwinkel um eine Oberarm-Unterarm-Drehachse 33, 33' drehen. Der Oberarm-Unterarm-Drehwinkel beträgt mindestens 60 Grad in beide Richtungen. Die Oberarm-Unterarm-Drehachsen 33, 33' sind parallel zu den Stellarm-Drehachsen 27, 27'.

Wie erläutert, wird die Werkzeugaufnahme 23, wenn die Stellarme 21, 21` entsprechend bewegt werden, in Draufsicht entlang der linearen Werkzeugaufnahmen-Bewegungsachse 26 bewegt. Dabei kann die Werkzeugaufnahme 23 abhängig von der Bewegung der Stellarme 21, 21' optional angehoben oder abgesenkt werden. Je nach der Bewegung der Stellarme 21, 21' überlagen sich diese beiden Bewegungen der Werkzeugaufnahme 23. Das heißt, die Werkzeugaufnahme 23 wird angehoben/abgesenkt und/oder orthogonal dazu linear bewegt. Dadurch wird der Bewegungsraum der Werkzeugaufnahme 23 vergrößert. Wie stark die Werkzeugaufnahme 23 angehoben oder abgesenkt wird, hängt von der Bewegung der Stellarme 21, 21' und deren Abmessungen ab.

Die Aufhängung 20 ist ferner mittels eines Aufhängungs-Drehgelenks 34 an dem Träger 13 lösbar angeordnet. Dadurch kann der Roboter 16, wenn dies gewünscht ist, von einem Träger 13 demontiert und an einem anderen Träger angeordnet werden. Insbesondere eine lösbare Verbindung ermöglicht ein einfaches Trennen der Bauteile bei Bedarf, zum Beispiel zum Zwecke einer Wartung oder Reparatur. Durch das Aufhängungs-Drehgelenk 34, das als Drehgelenk ausgeführt ist, kann die Aufhängung 20 relativ zu dem Träger 13 um die Aufhängungs-Drehachse 29 gedreht werden.

Aufgrund der Verbindung der Aufhängung 20 mit der Werkzeugaufnahme 23 über die Stellarme 21, 21' ist somit die Werkzeugaufnahme 23 infolge der Drehbewegung der Aufhängung 20 drehbar. Dadurch wird, insbesondere ergänzend zu der Bewegbarkeit der Werkzeugaufnahme 23 in Draufsicht entlang der linearen Werkzeugaufnahmen-Bewegungsachse 26 und/oder deren Anheben bzw. Absenken, der Bewegungsraum der Werkzeugaufnahme 23 vergrößert. Die Werkzeugaufnahme 23 ist folglich in einem 3-dimensionalen Bewegungsfeld bewegbar. Dadurch wird eine Einsatzflexibilität des Roboters 16 erhöht.

Die Aufhängungs-Drehachse 29 verläuft in Draufsicht durch einen Mittelpunkt der Aufhängung 20. Dadurch wird eine besonders günstige Kraftverteilung bzw. -leitung in dem Roboter 16 erreicht. Optional kann die Aufhängungs-Drehachse 29 in Draufsicht außerhalb des Mittelpunkts der Aufhängung 20 verlaufen, um den Roboter 16 flexibel an räumliche Einbaubedingungen, insbesondere der Verpackungsanlage 1, anzupassen.

Die Aufhängung 20 ist um einen Aufhängungs-Drehwinkel um die Aufhängungs-Drehachse 29 drehbar. Der Aufhängungs-Drehwinkel beträgt im vorliegenden Ausführungsbeispiel mindestens 360 Grad in beide Richtungen. Da die Werkzeugaufnahme 23 mit der Aufhängung 20 verbunden ist, wird entsprechend der Drehbewegung der Aufhängung 20 die Werkzeugaufnahme 23 mitbewegt und dadurch deren Bewegungsraum vergrößert.

Damit die Aufhängung 20 die Drehbewegung ausführt, wird das Aufhängungs-Drehgelenk 34 motorisch mittels eines Aufhängungs-Drehantriebs 35 angetrieben. Dies ermöglicht es, die Aufhängung 20 aktiv und separat zu bewegen. Der Aufhängungs-Drehantrieb 35 ist als Servoantrieb ausgeführt, wodurch eine besonders präzise Steuerung der Aufhängung 20 erreicht wird. Optional kann der Aufhängungs-Drehantrieb 35 pneumatisch oder hydraulisch betrieben sein.

Zwischen dem Aufhängungs-Drehgelenk 34 und dem Träger 13 ist eine Linearführung 36 angeordnet. Die Linearführung 36 weist einen stationären Teil 37 und einen relativ dazu beweglichen Schlitten 38 auf. Der stationäre Teil 37 ist an dem Träger 13 lösbar angeordnet. An dem Schlitten 38 ist die Aufhängung 20, insbesondere das Aufhängungs-Drehgelenk 34, lösbar angeordnet. Die lösbare Verbindung vereinfacht ein Trennen der Bauteile bei Bedarf zum Beispiel zum Zwecke einer Wartung oder Reparatur. Optional können das stationäre Teil 37 und der Träger 13 bzw. der Schlitten 38 und die Aufhängung 20 fest verbunden oder integral ausgebildet sein.

Indem sich der Schlitten 38 relativ zu dem stationären Teil 37 bewegt, insbesondere gleitet, bewegen sich die Aufhängung 20 und die daran angeordneten Stellarme 21, 21` mit der Werkzeugaufnahme 23 entlang einer linearen Aufhängungs-Bewegungsachse 39. Der Bewegungsraum der Werkezugaufnahme 23 wird dadurch vergrößert. Die lineare Aufhängungs-Bewegungsachse 39 geht im vorliegenden Ausführungsbeispiel in Draufsicht durch den Mittelpunkt der Aufhängung 20. Optional kann die lineare Aufhängungs-Bewegungsachse 39 von dem Mittelpunkt der Aufhängung 20 versetzt sein. Eine Orientierung der linearen Aufhängungs-Bewegungsachse 39 hängt zudem von einer Positionierung bzw. Orientierung des stationären Teils 37 an dem Träger 13 ab. Ferner hängt es von einer Länge des stationären Teils 37 ab, wie weit die Aufhängung 20 entlang der linearen Aufhängungs-Bewegungsachse bewegt werden kann. Im vorliegenden Ausführungsbeispiel ist die Aufhängung 20 bzw. der Schlitten 38 relativ zu dem Träger 13 bzw. dem stationären Teil 37 um mindestens etwa 100 cm bewegbar. Da das stationäre Teil 37 lösbar an dem Träger 13 angeordnet ist, kann dieser bei Bedarf, zum Beispiel um ein stationäres Teil mit größerer oder kleinerer Länge zu verwenden, einfach von dem Träger 13 getrennt werden.

Damit sich die Aufhängung 20 entlang der linearen Aufhängungs-Bewegungsachse 39 bewegt, weist der Roboter 16 einen Aufhängungs-Linearantrieb 40 auf. Dadurch kann die Aufhängung 20 unabhängig bewegt werden. Der Aufhängungs-Linearantrieb 40 ist elektrisch betrieben, kann aber optional pneumatisch oder hydraulisch betreibbar sein.

Zudem hängt der Bewegungsraum der Werkzeugaufnahme 23 von seiner Bewegung aufgrund der Werkzeugaufnahme-Gelenke 25, 25' ab, über die die Werkzeugaufnahme 23 mit den Stellarmen 21, 21', insbesondere den Unterarmen 31, 31', gelenkig verbunden ist.

Die Werkzeugaufnahme-Gelenke 25, 25' sind als Kugelgelenke ausgeführt und ermöglichen eine Drehung des jeweiligen Stellarms 21, 21' relativ zu der Werkzeugaufnahme 23 um alle drei Raumachsen, nämlich um eine Werkzeugaufnahmen-Drehachse 41 und eine erste, und zweite Werkzeugaufnahme-Kippachse 42, 43. Die Werkzeugaufnahme-Gelenke 25, 25' sind im vorliegenden Ausführungsbeispiel mittels eines gemeinsamen Werkzeugaufnahmen-Drehantriebs 44 aktiv antreibbar und zwar zum Drehen der Werkzeugaufnahme 23 um die Werkzeugaufnahmen-Drehachse 41. Der Werkzeugaufnahmen-Drehantrieb 44 ist elektrisch betrieben, kann aber optional pneumatisch oder hydraulisch betreibbar sein. Der Vorteil der separat drehbaren Werkzeugaufnahme 23 besteht darin, dass der Bewegungsraum der Werkzeugaufnahme 23 weiter vergrößert wird. Im Idealfall wird eine Genauigkeit der Bewegung und insbesondere der Positionierung der Werkzeugaufnahme 23 bzw. des daran angeordneten Werkzeugs 45 erhöht. Die Werkzeugaufnahme 23 ist im vorliegenden Ausführungsbeispiel um mindestens 360 Grad in beide Richtungen drehbar. Dadurch ist es möglich, die Werkzeugaufnahme 23 abhängig von dem zu bewegenden Produkt 11, insbesondere abhängig von dessen Form oder Aufnahmepunkt für das Werkzeug 45, zu orientieren. Im Idealfall kann das Werkzeug 45 das Produkt 11 besser aufnehmen bzw. abgeben.

Aufgrund des vorstehend beschriebenen Bewegungsraums der Werkzeugaufnahme 23 kann diese in Zusammenhang mit der Tiefziehverpackungsanlage 2 zum Beispiel abhängig von einer Objektaufnahmeposition, an der das Produkt 11 von dem Werkzeug 45 aufgenommen werden soll und einer Objektabgabeposition, an der das Produkt 11 von dem Werkzeug abgegeben werden soll, positioniert werden. Die Objektaufnahmeposition ist eine Position der Werkzeugaufnahme 23, an der das Werkzeug 45 das an dem Produktzuführband 12 positionierte Produkt 11 aufnimmt. Die Objektabgabeposition ist eine Position der Werkzeugaufnahme 23, an der das Werkzeug 45 das Produkt 11 abgibt, um es in die Verpackungsmulde 9, die auf dem Transportband 7` transportiert wird, zu füllen. Die Objektaufnahmeposition und die Objektabgabeposition sind von der Befüllstation 5, dem Transportband 7' und dem Produktzuführband 12 abhängig.

Die Werkzeugaufnahme 23 ist derart mittels der Roboter-Steuerung 19 steuerbar, dass sie selbst, das Werkzeug 45, das Produkt 11 und/oder eine Umgebung der Werkzeugaufnahme 23 nicht beschädigt wird. Dies ist insbesondere dann von Vorteil, wenn mehrere Roboter derart bewegbar sind, dass sich deren Bewegungsräume zumindest teilweise überlappen, zum Beispiel, wenn mehrere Roboter einer Arbeitsstation zugeordnet sind. Das heißt, die Roboter-Steuerung 19 steuert die Roboter 16, 17 derart, dass ihre Werkzeugaufnahmen je innerhalb des von den individuellen Robotern 16, 17 abhängigen Bewegungsraums bewegt werden, ohne sich gegenseitig zu beschädigen und/oder in ihrer gewünschten Bewegung zu behindern.

Der Roboter 16 wird ferner derart gesteuert, dass die Aufhängung 20, die Stellarme 21, 21' und/oder die Werkzeugaufnahme 23 zeitlich überlappend bewegt werden. Dadurch wird eine Zeit für die Ausführung einer gewünschten Bewegung der Werkzeugaufnahme 23 verringert. Optional können die Bewegungen der Aufhängung 20 und/oder der Stellarme 21, 21' und/oder der Werkzeugaufnahme 23 zeitlich deckungsgleich erfolgen.

Aufgrund der hohen Traglast des Roboters 16, des großen Bewegungsraumes und der schnellen Bewegung der Werkzeugaufnahme 23 kann der Roboter 16 in die Prozesse der Tiefziehverpackungsanlage 2 somit optimal integriert werden.

## Patentansprüche

1. Roboter (16, 17) für eine Verpackungsanlage (1), wobei der Roboter (16, 17) aufweist:
eine Aufhängung (20),
zumindest zwei Stellarme (21, 21'), welche jeweils gelenkig an der Aufhängung (20) angebracht sind,
eine Werkzeugaufnahme (23), welche gelenkig an den Stellarmen (21, 21') angebracht ist,
wobei durch Bewegen der Stellarme (21, 21') relativ zu der Aufhängung (20) die Werkzeugaufnahme (23) in Draufsicht entlang einer linearen Werkzeugaufnahmen-Bewegungsachse (26) bewegbar ist,
**dadurch gekennzeichnet, dass**
die Aufhängung (20) um eine Aufhängungs-Drehachse (29) drehbar ist.

2. Roboter nach Anspruch 1, **dadurch gekennzeichnet, dass**
jeder Stellarm (21, 21') um eine Stellarm-Drehachse (27, 27') drehbar ist, wobei die Stellarm-Drehachsen (27, 27') orthogonal zu der Aufhängungs-Drehachse (29) sind.

3. Roboter nach Anspruch 1 oder 2, **gekennzeichnet durch**
zumindest zwei Stellarm-Antriebe (28, 28') zum separaten Antreiben der zwei Stellarme (21, 21').

4. Roboter nach einem der vorangehenden Ansprüche, **dadurch gekennzeichnet, dass** durch Bewegen der Stellarme (21, 21') relativ zu der Aufhängung (20) die Werkzeugaufnahme (23) anhebbar und absenkbar ist.

5. Roboter nach einem der vorangehenden Ansprüche, **dadurch gekennzeichnet, dass** die Aufhängung (20) entlang einer linearen Aufhängungs-Bewegungsachse (39) bewegbar ist.

6. Roboter nach Anspruch 5, **gekennzeichnet durch**
einen Aufhängungs-Linearantrieb (40) zum Bewegen der Aufhängung (20) entlang der linearen Aufhängungs-Bewegungsachse (39).

7. Roboter nach einem der vorangehenden Ansprüche, **dadurch gekennzeichnet, dass** jeder Stellarm (21, 21') einen Oberarm (30, 30') und einen Unterarm (31, 31') aufweist,
wobei der Oberarm (30, 30') gelenkig an der Aufhängung (20) angebracht ist,
wobei der Unterarm (31, 31') gelenkig an der Werkzeugaufnahme (23) angebracht ist,
wobei der Oberarm (30, 30') und der Unterarm (31, 31') gelenkig miteinander verbunden sind.

8. Roboter nach einem der vorangehenden Ansprüche, **gekennzeichnet durch** einen Aufhängungs-Drehantrieb (35) zum Drehen der Aufhängung (20) um die Aufhängungs-Drehachse (29).

9. Roboter nach Anspruch 8, **dadurch gekennzeichnet, dass**
der Aufhängungs-Drehantrieb (35) ein Servoantrieb ist.

10. Roboter nach einem der vorangehenden Ansprüche, **gekennzeichnet durch** einen Werkzeugaufnahmen-Drehantrieb (44) zum Drehen der Werkzeugaufnahme (23) um eine Werkzeugaufnahmen-Drehachse (41).

11. Verpackungsanlage (1) mit einem Roboter (16, 17) nach einem der vorangehenden Ansprüche.

12. Verfahren (100) zum Betreiben eines Roboters (16, 17) in einer Verpackungsanlage (1), wobei das Verfahren (100) die Schritte aufweist:
Bewegen zumindest zweier gelenkig an einer Aufhängung (20) angebrachter Stellarme (21, 21') relativ zu der Aufhängung (20), so dass eine an den zwei Stellarmen (21, 21') angebrachte Werkzeugaufnahme (23) relativ zu der Aufhängung (20) in Draufsicht entlang einer linearen Werkzeugaufnahmen-Bewegungsachse (26) bewegt wird,
Drehen der Aufhängung (20) um eine Aufhängungs-Drehachse (29) zum Erweitern eines Bewegungsraums der Werkzeugaufnahme (23).

13. Verfahren nach Anspruch 12, **dadurch gekennzeichnet, dass**
die Aufhängung (20) entlang einer linearen Aufhängungs-Bewegungsachse (39) zum Erweitern des Bewegungsraums der Werkzeugaufnahme (23) bewegt wird.

14. Verfahren nach Anspruch 12 oder 13, **dadurch gekennzeichnet, dass**
die Werkzeugaufnahme (23) um eine Werkzeugaufnahmen-Drehachse (41) gedreht wird.

15. Verfahren nach einem der Ansprüche 12 bis 14, **dadurch gekennzeichnet, dass**
die Aufhängung (20) und/oder die Stellarme (21, 21') und/oder die Werkzeugaufnahme (23) zeitlich überlappend bewegt werden.
